# EUROPEAN PATENT APPLICATION

(11) **EP 1 901 189 A2**
(43) Date of publication of application: **19.03.2008**
(21) Application number: 07253575.0
(22) Date of filing: 10.09.2007
(51) Int. Cl.: G06F 17/50

(54) **Parts managing system, parts managing method, computer program and computer readable storage medium**

(30) Priority: 14.09.2006 JP 2006249692
(71) Applicant: Ricoh Company, Ltd., Tokyo 143-8555 (JP)
(72) Inventor: Yamagata, Junichi, Tokyo 143-8555 (JP); Kagawa, Masaaki, Tokyo 143-8555 (JP); Terunuma, Ikumi, Tokyo 143-8555 (JP); Satoh, Naoyuku, Tokyo 143-8555 (JP)
(74) Representative: Leeming, John Gerard

(57) **Abstract**

A parts managing system extracts data on each part configuring a designated three-dimensional model, with reference to three-dimensional model data and part configuration information, and stores and manages the data in an extracted-data storing unit (17). The parts managing system searches the extracted-data storing unit (17) using specified retrieval information and displays each part unit that is retrieved and an assembly diagram in which only the retrieved part is highlighted.

## Description

The present application claims priority to and incorporates by reference the entire contents of Japanese priority document, 2006-249692 filed in Japan on September 14, 2006. The present application incorporates by reference the entire contents of Japanese application, 2005-267789 filed in Japan on September 15, 2005.

The present invention relates to a parts managing system, a parts managing method, a program, and a recording medium.

Conventionally, parts managing system based on three-dimensional model data manages each part using a component number or a part name. A retrieval result is displayed by only the component number or the part name. Alternatively, a part unit is drawn three-dimensionally and displayed.

For example, in Japanese Patent Application Laid-Open No. Heisei 6-176085, following processes are performed to quickly create a component table for a product of a single model from a drawing created by a designer, without the drawing being drawn on paper, and to provide a production department or the like with the component table, in addition to a design drawing. In a design terminal, a drawing is created and stored in a created drawing file. Input attribute information is stored in an attribute information file. The design terminal sends retrieval data including a stratification symbol and a retrieved item name to a management terminal by a numbering requesting unit. The management terminal attaches a consecutive number subsequent to an already registered drawing code to the retrieval data as a new drawing code and transfers the drawing code to the design terminal. When a registration request is made, a registration terminal registers diagram data including the drawing code as image data and registers the retrieval data and the drawing code as text data. The attribute information is registered in the attribute information file, forming a database including item information and configuration information. When the component table is created, a component table that states product names, specifications, and the like and establishes a correlation between components configuring a product is created by use of the item information and the configuration information registered in the database.

However, as the number of parts increases, it becomes difficult to recognize where a part is used by merely looking at a part unit. Moreover, it becomes difficult to locate a required part. Because internal parts cannot be seen when the device is in an assembled state, the parts are required to be spread out and displayed. In other words, an exploded view is required to be created. The exploded view is created manually, which is time consuming and costly.

It is an object of the present invention to at least partially solve the problems in the conventional technology.

According to an aspect of the present invention, there is provided a parts managing system including a data extracting unit that extracts data on each part configuring a designated three-dimensional model, with reference to three-dimensional model data and part configuration information, and stores the data in an extracted-data storing unit; a data managing unit that manages data in the extracted-data storing unit; a data retrieving unit that makes an inquiry to the data managing unit using specified retrieval information and receives a retrieval result; a retrieval-result displaying unit that displays a retrieval result list received from the data retrieving unit; and a part displaying unit that displays each part unit that is retrieved and an assembly diagram highlighting only a retrieved part.

According to another aspect of the present invention, there is provided a parts managing method including extracting data on each part configuring a designated three-dimensional model, with reference to three-dimensional model data and part configuration information; storing and managing the data in an extracted-data storing unit; searching the extracted-data storing unit using specified retrieval information; and displaying each part unit that is retrieved at the searching and an assembly diagram highlighting only a retrieved part.

According to another aspect of the present invention, there is provided a computer program product that includes a computer-readable recording medium that stores therein a computer program that causes a computer to execute the above method.

The above and other objects, features, advantages and technical and industrial significance of this invention will be better understood by reading the following detailed description of presently preferred embodiments of the invention, when considered in connection with the accompanying drawings.
Fig. 1 is a hardware block diagram of a parts managing system according to an embodiment of the present invention;
Fig. 2 is a functional block diagram of the parts managing system;
Fig. 3 is a flowchart of processes performed by a data extracting unit and a data managing unit shown in Fig. 2;
Fig. 4 is a flowchart of processes performed by a data retrieving unit, a retrieval-result displaying unit, and a part displaying unit shown in Fig. 2;
Fig. 5 is a diagram of a display example of an assembly diagram;
Fig. 6 is a diagram of another display example of an assembly diagram;
Fig. 7 is an explanatory diagram of an example in which image data rendered in advance is stored and displayed;
Fig. 8 is a diagram of still another display example of an assembly diagram;
Fig. 9 is a diagram of still another display example of an assembly diagram; and
Fig. 10 is a diagram of still another display example of an assembly diagram.

Exemplary embodiments of the present invention are below described with reference to the accompanying drawings.

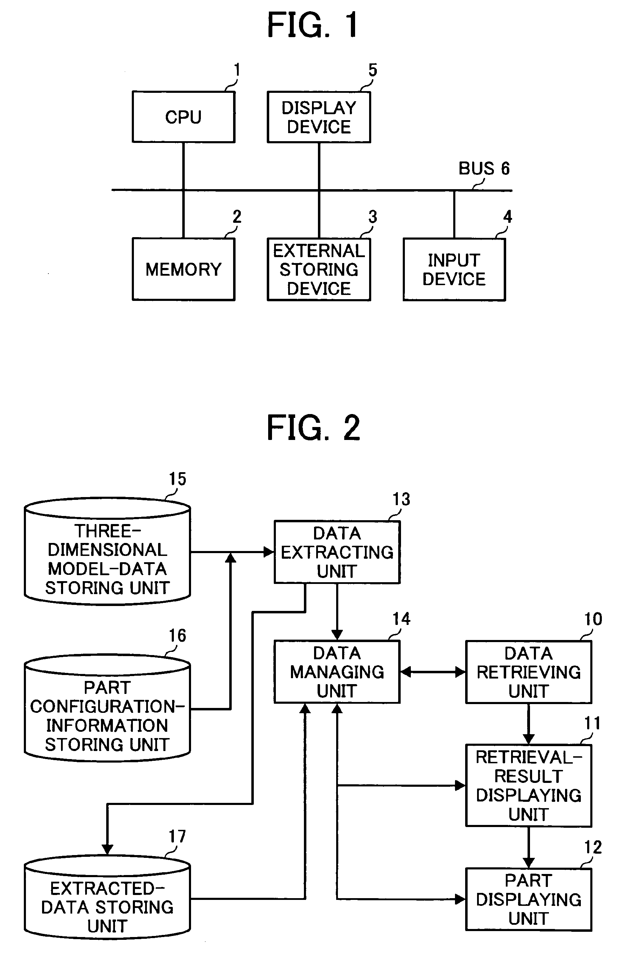

Fig. 1 is a hardware block diagram of a parts managing system according to an embodiment of the present invention. The parts managing system includes a central processing unit (CPU) 1, a memory (such as a read-only memory (ROM) or a random-access memory (RAM)) 2, an external storing device (such as a hard disk device) 3, an input device 4, and a display device 5. The CPU 1 operates in adherence to a computer program. The memory 2 temporarily stores therein the computer program and various data. The external storing device 3 stores therein computer programs and various data. The input device 4 includes a keyboard, a mouse, and the like, for inputting various data, including three-dimensional shape data, and instructions. All the component units are connected to each other by a bus 6.

Fig. 2 is a functional block diagram of the parts managing system. The parts managing system includes a data extracting unit 13, a data managing unit 14, a data retrieving unit 10, a retrieval-result displaying unit 11, and a part displaying unit 12. The data extracting unit 13 extracts data of each part configuring a designated three-dimensional model, with reference to a three-dimensional model-data storing unit 15 and a part configuration-information storing unit 16, and stores the data in an extracted-data storing unit 17. The data managing unit 14 manages the data stored in the extracted-data storing unit 17. The data retrieving unit 10 makes an inquiry to the data managing unit 14 using retrieval information input by a user and receives a retrieval result. The retrieval-result displaying unit 11 displays a list of retrieval results. The part displaying unit 12 displays each part unit that has been retrieved and displays an assembly diagram highlighting only the retrieved part.

The computer program imitates the functions of the parts managing system. Each processing unit described above is actualized by the program being run using hardware, including the input device 4 and the display device 5.
Each storing unit is actualized through use of the memory 2 and the external storing device 3.

Shape, size, name, and assembly state of each part are recorded in the three-dimensional model-data storing unit 15. Configuration of each part is recorded in the part configuration-information storing unit 16. For example, if a product is a printer, units are assembled to configure the printer. A unit is a group of some parts, such as an exterior unit, a paper supplying unit, and a writing unit. Information such as this and information required to manage each part, such as a part name, a unit name, a component number, the size, and the assembly state, are recorded in the part configuration-information storing unit 16.

The data extracting unit 13 extracts information required for displaying the parts and information required for retrieval, from the three-dimensional model data and part configuration information. The information required for displaying the parts is, for example, the shape, the size, and the assembly state of each part. The information required for retrieval is, for example, the part name, the unit name, and the component number. The data extracting unit 13 registers the extracted information in the extracted-data storing unit 17.

The data managing unit 14 manages the data stored in the extracted-data storing unit 17. The data managing unit 14 transmits the stored data in response to a request from the data retrieving unit 10, the retrieval-result displaying unit 11, and the part displaying unit 12.

The data retrieving unit 10 receives the retrieval information from the input device 4 and makes the inquiry to the data managing unit 14 using the input retrieval information. The data managing unit 14 retrieves part information registered in the extracted-data storing unit 17, based on the retrieval information, and transmits a retrieval result list to the data retrieving unit 10.

The data retrieving unit 10 sends the received retrieval result list to the retrieval-result displaying unit 11. The retrieval-result displaying unit 11 displays the retrieval result list received from the data retrieving unit 10 in the display device 5. The retrieval result list is a list of part names, unit names, component numbers, and the like.

The user cannot know from a retrieval result list such as this whether a part is a desired part or in what position the part is assembled. Therefore, the user starts the part displaying unit 12.

The part displaying unit 12 extracts each part unit and the assembly state in the retrieval result list from the extracted-data storing unit 17. The part displaying unit 12 displays the part unit and the assembly diagram in the display device 5. The part unit can be displayed by being drawn using shading or in wireframe mode.

The assembly diagram refers to an overall image of all parts in an assembled state. For example, if the product is the printer, all parts included in the printer are drawn and an overall image of the printer is displayed.

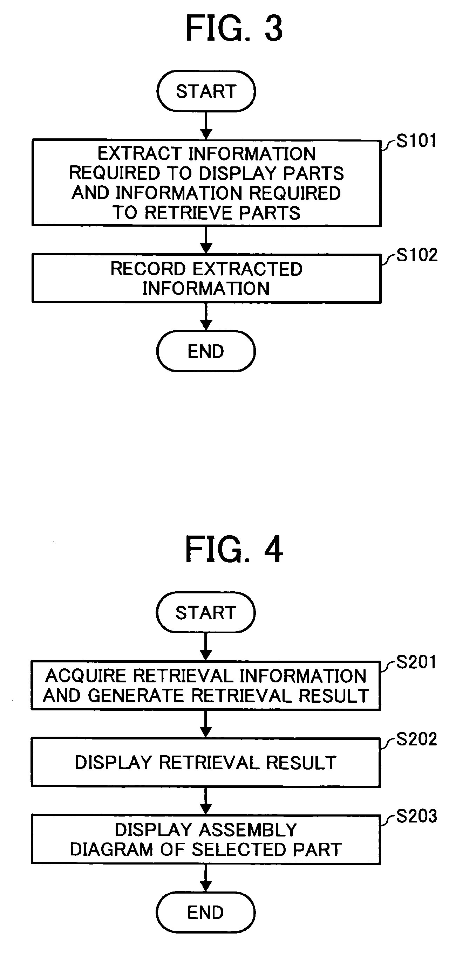

Fig. 3 is a flowchart of processes performed by the data extracting unit 13 and the data managing unit 14. The CPU 1 controls the overall processes and functions as the data extracting unit 13 and the data managing unit 14. As shown in Fig. 3, first, the data extracting unit 13 respectively extracts the information required for displaying the parts and the information required for retrieving the parts from the three-dimensional model data and the part configuration information (Step S101). Next, the data managing unit 14 records the extracted information (Step S102).

Fig. 4 is a flowchart of processes performed by the data retrieving unit 10, the retrieval-result displaying unit 11, and the part displaying unit 12. The CPU 1 controls the overall processes and functions as the data retrieving unit 10, the retrieval-result displaying unit 11, and the part displaying unit 12. As shown in Fig. 4, first, the data retrieving unit 10 acquires retrieval information from the user, retrieves the part information registered in the data managing unit 14 based on the retrieval information as retrieval result (Step S201). Next, the retrieval-result displaying unit 11 displays the retrieval results (Step S202) so that the user can check information about an arbitrary part. Then, the part displaying unit 12 displays an assembly diagram of a part selected by the user from within the displayed retrieval results (Step S203).

In one embodiment, when displaying an assembly diagram at step S203, only the edge of the selected part is highlighted by, for example, being drawn with a thick red line. A section of the printer in which the part is used is indicated. As a result, the selected part can be located easily.

In another embodiment, as shown in Fig. 4, when displaying the assembly diagram at step S203, parts other than the selected part is drawn translucently, while only the selected part is drawn using shading. Therefore, the retrieved part is displayed with further clarity. Recognition of the part can be enhanced and the retrievability can be enhanced.

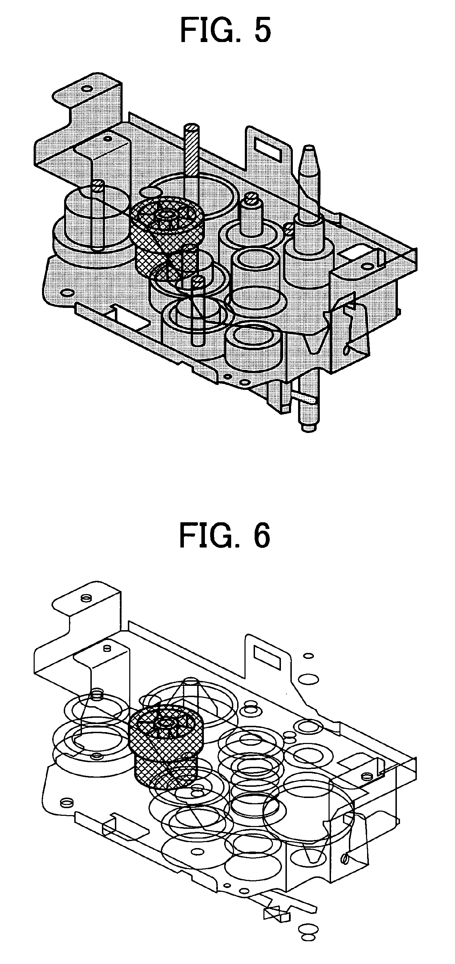

In still another embodiment, as shown in Fig. 5, the parts other than the selected part are drawn in wire frame mode and only the selected part is drawn using shading. Therefore, the retrieved part is displayed with further clarity. Recognition of the part can be enhanced and the retrievability can be enhanced. Shading is a method in which a surface is shaded using positional information of a light source, an object, and perspective.

In still another embodiment, the part displaying unit 12 receives zoom information (a zooming level for reducing and enlarging) specified through the input device 4. As shown in Fig. 6, the part displaying unit 12 displays an assembly diagram created by using the zoom information.

In this way, a display proportion of the part can be changed as desired. In other words, an enlarged view and a reduced view can be displayed. Therefore, even when a plurality of parts are disposed internally in a section that is difficult to recognize, the recognizability of the retrieved part is enhanced.

The part displaying unit 12 receives perspective information (a direction from which the user views the assembly diagram) specified through the input device 4. As shown in Fig. 6, the part displaying unit 12 displays an assembly diagram rotated to a state viewed from the perspective information. In this case, through use of the input device 4, a display direction of the part displayed in the display device 5 can be freely changed and a viewing direction can be changed. As a result, the recognizability of the retrieved part can be enhanced.

Furthermore, the three-dimensional model-data storing unit 15 stores two-dimensional image data or three-dimensional image data that has been rendered in advance depending on a plurality of perspectives and a plurality of zoom levels, for an overall two-dimensional model or an overall three-dimensional model and for each part forming the model. When the data extracting unit 13 extracts the part, the two-dimensional image data or the two-dimensional image data is extracted as well and stored in the extracted-data storing unit 17. Rendering means to draw a three-dimensional graphic, for example, through calculation of information related to an object or a figure provided as numerical data, and convert the three-dimensional graphic into an image. When the three-dimensional graphic is rendered, the image is created by shadow-erasing, shading, and the like being performed with consideration to a perspective position, a number of light sources, a light source position, a light source type, an object shape and vertex coordinates, and material properties.

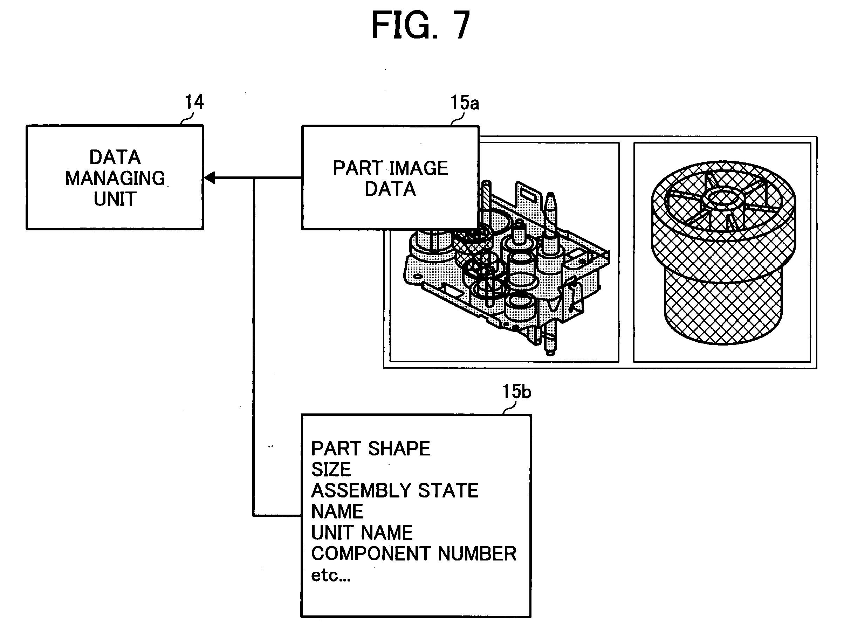

Fig. 7 shows a display example described above. The data managing unit 14 renders part data in advance and stores the rendered data as image data. In other words, as shown in Fig. 7, part image data 15a acquired through rendering and information 15b thereof are stored. Then, the part image data 15a and the information 15b are respectively displayed in the part displaying unit 12. Time required for rendering is eliminated, thereby shortening time required for display.

In this way, when the part unit and the assembly diagram are displayed in the part displaying unit 12, for example, the three-dimensional image data of the retrieved part is extracted from the extracted-data storing unit 17 and displayed. As a result, the time required for rendering is eliminated, the display speed can be improved, and even a computer with low processing capabilities can sufficiently withstand practical use.

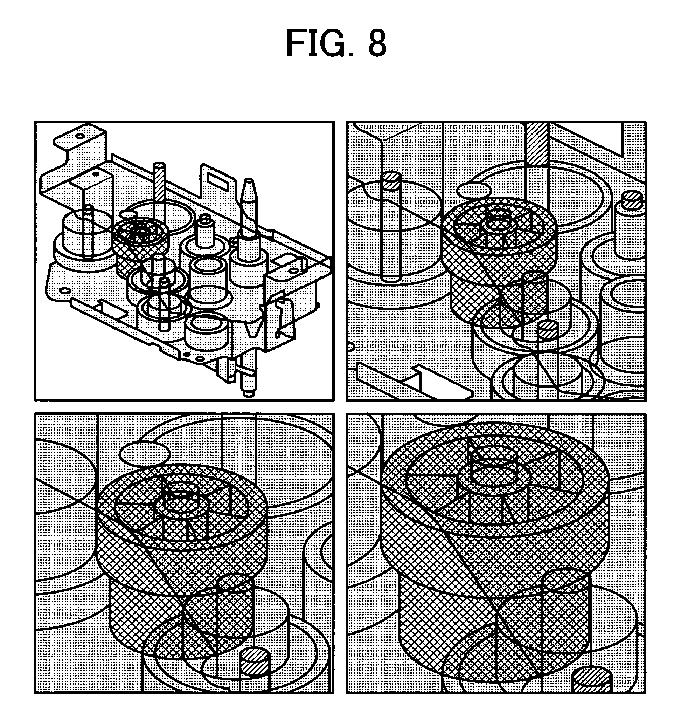

Fig. 8 is an explanatory diagram of an example of the assembly diagram of the retrieved part displayed depending on variable proportions. As shown in Fig. 8, a display proportion of the part is variable in the part displaying unit 12. In other words, the enlarged view and the reduced view can be displayed. Therefore, even when the parts are disposed internally in the section that is difficult to recognize, the recognizability of the retrieved part can be enhanced by enlargement.

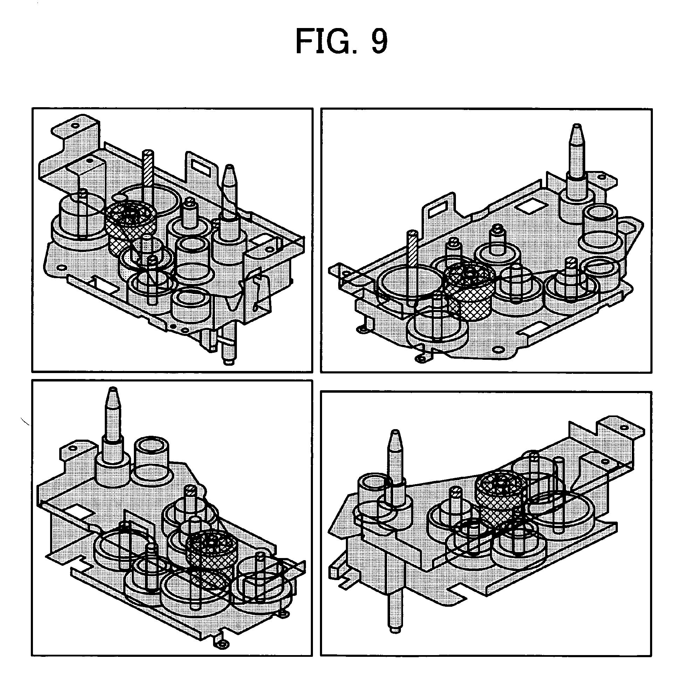

Fig. 9 is an explanatory diagram of an example of an assembly diagram of the retrieved parts displayed from a plurality of perspectives. In this example, the display direction of the part displayed in the display device 5 can be freely changed and the viewing direction can be changed. As a result, the recognizability of the retrieved part can be enhanced.

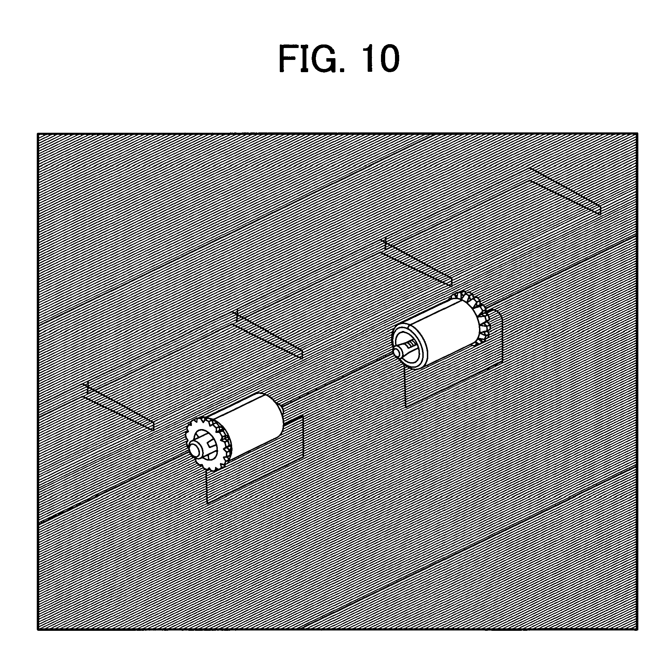

Fig. 10 is an explanatory diagram of an example of a highlighted display of the retrieved part. In this example, the parts are highlighted and displayed in the part displaying unit 12. As a result, the recognizability of the retrieved part when parts with a same shape are present can be enhanced.

All processing units and storing units of the above-described parts managing system can be operated on a single computer. Alternatively, the data extracting unit 13, the data managing unit 14, the three-dimensional model-data storing unit 15, the part configuration-information storing unit 16, and the extracted-data storing unit 17 can be operated on a parts managing server. The data retrieving unit 10, the retrieval-result displaying unit 11, and the part displaying unit 12 can be operated on a separate computer connected to the parts managing server by a network.

Each function included in the parts managing system according to the embodiment can respectively be a computer program and written to a recording medium in advance. Computer programs recorded in the recording medium are stored in a memory or a storing device included in a computer. An object of the invention can be achieved by the computer programs being run. In this case, the computer programs themselves that are read from the recording medium actualize the above-described functions according to the embodiment. Therefore, the invention includes the computer programs and the recording medium.

The invention includes when the functions according to the embodiment are actualized by the computer programs performing processing jointly with an operating system, another application system, or the like based on an instruction from the program.

A computer program actualizing a function according to the embodiment can be provided in the recording medium of any format, such as a disk-type format (for example, a magnetic disk and an optical disk), a card-type format (for example, a memory card and an optical card), a semiconductor memory-type format (for example, a ROM and a non-volatile memory), and a tape-type format (for example, a magnetic tape and a cassette tape). Alternatively, a program stored in a storing unit can be directly supplied and received from a server computer, via the network. In this case, a storing device of the server computer is also included in the recording medium of the invention.

In this way, as a result of the functions according to the embodiment being actualized as the programs and distributed, cost can be reduced, and portability and versatility can be enhanced.

According to an aspect of the present invention, in an assembly diagram, a target part is highlighted. As a result, creation of an exploded view can be omitted, and part recognizability can be enhanced.

The parts other than the target part can be displayed translucently or displayed in wireframe mode. As a result, the retrieved part can be further highlighted and displayed.

When image data of a part has been rendered in advance is stored and an assembly diagram is displayed, display speed can be improved as a result of the stored image data being used.

The enlarged view and reduced view, and a rotated view of the assembly diagram can be displayed. As a result, the retrieved part can be viewed from any angle.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A parts managing system comprising:
a data extracting unit (13) that extracts data on each part configuring a designated three-dimensional model, with reference to three-dimensional model data and part configuration information, and stores the data in an extracted-data storing unit (17);
a data managing unit (14) that manages data in the extracted-data storing unit (17);
a data retrieving unit (10) that makes an inquiry to the data managing unit (14) using specified retrieval information and receives a retrieval result;
a retrieval-result displaying unit (11) that displays a retrieval result list received from the data retrieving unit (10); and
a part displaying unit (12) that displays each part unit that is retrieved and an assembly diagram highlighting only a retrieved part.

2. The parts managing system according to claim 1, wherein the part displaying unit (12) displays an assembly diagram in which parts other than the retrieved part are drawn translucently and only the retrieved part is drawn using shading.

3. The parts managing system according to either claim 1 or claim 2, wherein the part displaying unit (12) displays an assembly diagram in which parts other than the retrieved part are drawn in wireframe mode and only the retrieved part is drawn using shading.

4. The parts managing system according to any one of the preceding claims, wherein
the data managing unit (14) renders part data in advance, and stores image data acquired as a result of the rendering, and
the part displaying unit (12) displays the image data rendered by the data managing unit (14).

5. The parts managing system according to any one of claims 1 to 4, wherein the part displaying unit (12) varies a part display proportion.

6. The parts managing system according to any one of claims 1 to 5, wherein the part displaying unit (12) freely rotates a part.

7. The parts managing system according to any one of claims 1 to 6, wherein the part displaying unit (12) highlights a plurality of relevant parts and displays the parts.

8. The parts managing system according to any one of claims 1 to 7, wherein
the data extracting unit (13) extracts two-dimensional image data stored in advance and stores the data with the extracted part data in the extracted-data storing unit (17), and
the part displaying unit (12) extracts the two-dimensional image data of the retrieved part from the extracted-data storing unit (17) and displays the two-dimensional image data, when the assembly drawing is displayed.

9. A parts managing method comprising:
extracting data on each part configuring a designated three-dimensional model, with reference to three-dimensional model data and part configuration information;
storing and managing the data in an extracted-data storing unit;
searching the extracted-data storing unit using specified retrieval information; and
displaying each part unit that is retrieved at the searching and an assembly diagram highlighting only a retrieved part.

10. The parts managing method according to claim 9, wherein the displaying includes displaying an assembly diagram in which parts other than the retrieved part are drawn translucently and only the retrieved part is drawn using shading.

11. The parts managing method according to either claim 9 or claim 10, wherein the displaying unit includes displaying an assembly diagram in which parts other than the retrieved part are drawn in wireframe mode and only the retrieved part is drawn using shading.

12. The parts managing method according to any one of claims 9 to 11, wherein
the storing and managing includes rendering part data in advance, storing image data acquired as a result of the rendering, and
displaying includes displaying the image data rendered at the storing and managing.

13. The parts managing method according to any one of claims 9 to 12, wherein the displaying includes varying a part display proportion.

14. The parts managing method according to any one of claims 9 to 13, wherein the displaying includes freely rotating a part.

15. The parts managing method according to any one of claims 9 to 14, wherein the displaying includes highlights a plurality of relevant parts and displays the parts.

16. The parts managing method according to any one of claims 9 to 15, wherein
the extracting includes extracting two-dimensional image data stored in advance and storing the data with the extracted part data in a storing unit, and
the displaying includes extracting the two-dimensional image data of the retrieved part from the storing unit and displays the two-dimensional image data when displaying the assembly drawing.

17. A computer program comprising program code means that, when executed on a computer system instructs a computer system to carry out the method according to any one of claims 9 to 16.

18. A computer readable storage medium having recorded thereon program code means that, when executed on a computer system, instructs a computer system to carry out the method according to any one of claims 9 to 16.
